# EUROPÄISCHE PATENTSCHRIFT

(11) **EP 1 584 226 B1**
(45) Veröffentlichungstag und Bekanntmachung des Hinweises auf die Patenterteilung: **19.06.2013**
(21) Anmeldenummer: 05007354.3
(22) Anmeldetag: 05.04.2005
(51) Int. Cl.: A01F 15/10, A01D 90/04

(54) **Schneidwerk für/an landwirtschaftlichen Erntefahrzeugen**
Cutting device for/at agricultural harvesters
Dispositif de coupe pour /dans des machines de récolte

(30) Priorität: 07.04.2004 DE 102004017080
(43) Veröffentlichungstag der Anmeldung: 12.10.2005
(73) Patentinhaber: Welger Maschinenfabrik GmbH, 38304 Wolfenbüttel (DE)
(72) Erfinder: Amanatidis, Konstantinos, 38302 Wolfenbüttel (DE)

(56) Entgegenhaltungen:
- EP-A- 0 044 966
- EP-A- 0 579 594
- DE-A1- 3 405 467
- DE-A1- 19 617 033
- DE-C1- 3 213 199

## Beschreibung

Die Erfindung betrifft ein Schneidwerk für/an landwirtschaftlichen Erntefahrzeugen nach dem Oberbegriff des Patentanspruches 1.

Die vorstehend beschriebene Vorrichtung lässt sich der DE 196 17 033 C2 entnehmen. Der einzige Mangel dieser Vorrichtung, die sich in der Praxis gut bewährt, besteht darin, dass die Schnittlänge nur durch manuelles Einsetzen zusätzlicher oder Herausnehmen einzelner Messer verändert werden kann.

Es sind verschiedene Ausführungsformen von Schneidwerken bekannt, bei denen einzelne Messer oder Gruppen von Messern durch eine Schalteinrichtung ein- und ausschaltbar sind, um die Anzahl der wirksamen Messer vorzuwählen.

Die DE 34 05 467 A1 schlägt zwei in Förderrichtung mit Abstand umfangsversetzte Messerträger vor, die unabhängig voneinander verschwenkbar sind, um die jeweilige Messerreihe insgesamt in oder außer Eingriff zu bringen. Durch den Umfangsversatz kommen die Messer der zweiten Messerreihe immer später zum Eingriff als die Messer der ersten Messerreihe. Ein schlechtes Schnittbild ist die Folge. Darüber hinaus benötigt diese Anordnung einen langen Förderkanal, der zumindest bei Ballenpressen nicht vorhanden ist. Es fehlt auch ein Hinweis, wie die Messer oder die Messerreihen bei einer Überlast ausweichen sollen.

In der DE 32 13 199 C2 wird eine Schneideinrichtung offenbart, bei der die in den Förderkanal hineinragenden Messer über Stützklauen, die auf einer Schaltwelle in einzelnen Reihen in achsparalleler Ausrichtung in jeweils unterschiedlicher Zahl angebracht sind, in der Schneidstellung abgestützt werden. Die Messer sind beim Ausschwenken aus ihrer Schneidstellung in die Nichtschneidstellung nicht formschlüssig mit der Schaltwelle verbunden und bleiben in teilausgeschwenkter Stellung aufgrund von Verschmutzungen und klebrigen Futtersäften in den Förderkanalschlitzen im Förderkanal hängen, welches die Schnittqualität verschlechtert und den Leistungsbedarf erhöht.

Bei einem durch die DE 43 02 199 C2 bekannten Schneidwerk ist jedes Messer einzeln über eine Schiebestange unter Federdruck abgesichert und über jeweils eine Ver- bzw. Entriegelungsstange in Gruppen oder einzeln ausschwenk- und verriegelbar. Eine Querverbindung dient zum Verschieben aller Schiebestangen mittels eines Hydrozylinders. Die Anzahl der wieder einzuschwenkenden Messer wird über eine Nockenschaltwelle festgelegt. Diese bekannte Schalteinrichtung erfordert einen relativ hohen Herstellungs- und Wartungsaufwand. Darüber hinaus weichen die Messer bei Überlast einzeln aus und können in teilausgeschwenkter Stellung im Förderkanal hängen bleiben. Das Halmgut wird in diesem Bereich nicht geschnitten.

Der Erfindung liegt die Aufgabe zugrunde, die eingangs beschriebene Vorrichtung hinsichtlich der Verstellung der Schnittlänge zu verbessern.

Zur Lösung der gestellten Aufgabe zeichnet sich das Schneidwerk der vorstehend genannten Art durch die im kennzeichnenden Teil des Anspruches 1 angegebenen Merkmale aus. Hinsichtlich der weiteren Ausgestaltung der Erfindung wird auf die Ansprüche 2 bis 6 verwiesen.

Der Grundgedanke der Erfindung besteht darin, alle Vorteile des Schneidwerkes gemäß DE 196 17 033 C2 auch bei einem Schneidwerk mit einer Schalteinrichtung für die Messeranzahl zu erreichen. Die vorhandene Konstruktion der Messer, der -betätigung und der -überlastsicherung bleibt unverändert und wird auf einfachste Weise nur ergänzt durch baugieiche Teile und ein Minimum an Neuteilen, wodurch praktisch kein neues Funktionsrisiko entsteht, weil das Funktionsprinzip an sich unverändert bleibt. Die konstruktive Ausgestaltung der formschlüssigen Verbindung zwischen Messer und Hebel bleibt somit völlig unverändert. Auf überraschend einfache Weise lässt sich nunmehr die Anzahl der im wirksamen Schneideingriff befindlichen Messer in einem Schneidwerk gemäß DE 196 17 033 C2 per Knopfdruck vom Schlepper aus einstellen.

In weiterer Ausgestaltung ist vorgesehen, dass der verschwenkbar gelagerte Hebel drehfest mit einer zweiten Messerschwenkwelle verbunden ist. Diese zweite Messerschwenkwelle verbindet mehrere Messer einer zweiten Gruppe zur gemeinsamen Ansteuerung.

Nach einem weiteren Merkmal der Erfindung ist der zweiten Messerschwenkwelle eine eigene Stelleinrichtung zugeordnet.

Vorzugsweise greift die Stelleinrichtung an einem drehbar auf der ersten Messerschwenkwelle gelagerten Winkelhebel an, welcher drehfest mit der zweiten Messerschwenkwelle verbunden ist. Der Winkelhebel kann nach dem Verhältnis der Größe seiner Arme eine Übersetzung liefern, um die Stellkräfte und/oder die Überlastkräfte anzupassen.

Eine bevorzugte Ausgestaltung der Erfindung besteht darin, dass mehrere in Reihe nebeneinander angeordnete Messer abwechselnd der ersten Messerschwenkwelle oder der zweiten Messerschwenkwelle zugeordnet sind. So lassen sich der einen Messergruppe beispielsweise acht Messer und der anderen Messergruppe sieben Messer zuordnen, wodurch sich vier Wahlmöglichkeiten ergeben:
- eine Messergruppe im Schneideingriff;
- beide Messergruppen im Schneideingriff;
- die andere Messergruppe im Schneideingriff oder
- beide Messergruppen im Nichtschneideingriff.

Um auch die zweite Messergruppe gegen Fremdkörper abzusichern, ist der zweiten Messerschwenkwelle direkt oder indirekt eine eigene Überlastsicherung zugeordnet.

In der nachfolgenden Zeichnung ist die Erfindung an einem Ausführungsbeispiel näher erläutert. Es zeigt:
- Fig.1: eine perspektivische Darstellung eines Teiles des Schneidwerkes, wobei übersichtshalber von der einen Messergruppe nur ein Messer und von der anderen Messergruppe nur zwei Messer dargestellt ist/sind;
- Fig. 2 und 3: Teilseitenansichten gemäß Fig. 1 in Richtung des Pfeiles X gesehen auf eine gemäß DE 196 17 033 C2 bekannte erste Messergruppe, deren Messer sich in Fig. 2 in Nichtschneidstellung und in Fig. 3 in Schneidstellung befinden und
- Fig. 4 und 5: Teilseitenansichten gemäß Fig. 1 in Richtung des Pfeiles Y gesehen auf eine erfindungsgemäße zweite Messergruppe, deren Messer sich in Fig. 4 Nichtschneidstellung und in Fig. 5 in Schneidstellung befinden.

Hinsichtlich des Aufbaus und der Wirkungsweise eines vorbekannten Schneidwerkes kann z.B. auf die deutsche Patentschrift 196 17 033 C2 verwiesen werden.

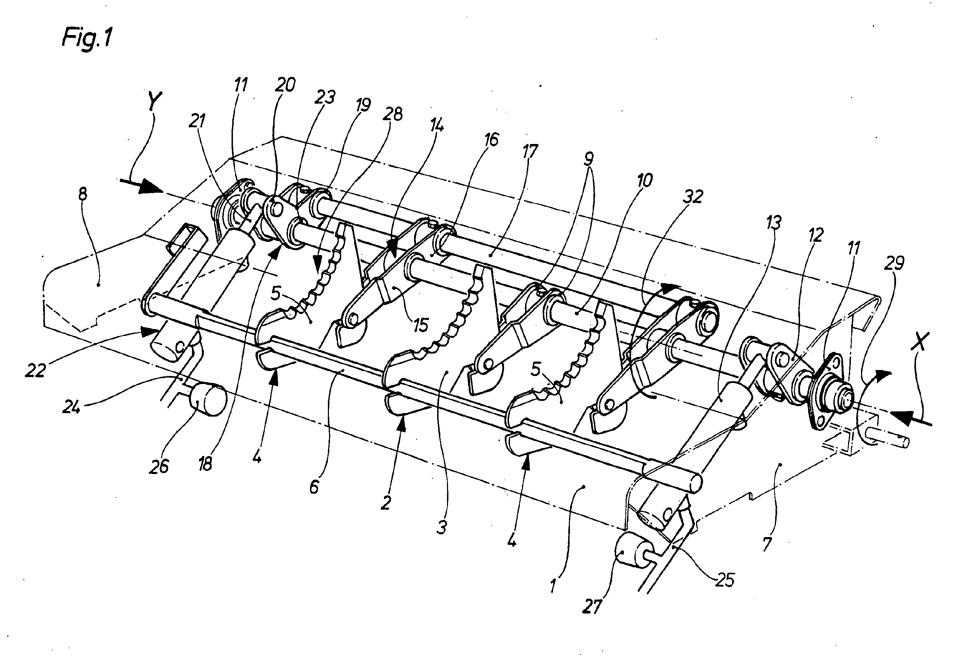

Von einem derartigen Schneidwerk zeigt Figur 1 lediglich einen Förderkanalboden 1 mit einer ersten Messergruppe 2, z.B. mit acht mit seitlichem Abstand nebeneinander angeordneten Messern, von der nur ein Messer 3 dargestellt ist und einer zweiten Messergruppe 4, z.B. mit sieben Messern, von denen nur zwei Messer 5 gezeichnet sind.

Alle Messer 3, 5 sind auf einer Messertragwelle 6 schwenkbeweglich gelagert. Die Messertragwelle 6 ist in Seitenwänden 7, 8 des Förderkanalbodens 1 verdrehbar angeordnet und durch nicht dargestellte Mittel arretierbar.

Das Messer 3 der ersten Messergruppe 2 ist durch einen Hebel 9 mit einer ersten Messerschwenkwelle 10 verbunden, die ebenfalls ortsfest aber in Lagern 11 drehbar in den Seitenwänden 7, 8 des Förderkanalbodens 1 angeordnet ist und über einen drehfest mit der ersten Messerschwenkwelle 10 verbundenen Kurbelarm 12 mit einem doppeltwirkenden Hydrozylinder 13 in Verbindung steht, um das Messer 3 um die Messertragwelle 6 zu verschwenken. Der Hebel 9 ist drehfest mit der ersten Messerschwenkwelle 10 verbunden. Die Verbindung des Hebels 9 mit dem Messer 3 kann in gleicher Art und Weise ausgeführt werden, wie in der DE 196 17 033 C2 dargestellt und beschrieben.

Neu ist, dass jedes Messer 5 der zweiten Messergruppe 4 mit einem verschwenkbar auf der ersten Messerschwenkwelle 10 gelagerten Hebel 14 verbunden und gegenüber dieser verstellbar ist. Jeder Hebel 14 ist als zweiarmiger Hebel ausgeführt, dessen einer Hebelarm 15 am Messer 5 angreift und dessen anderer Hebelarm 16 drehfest mit einer parallel zur ersten Messerschwenkwelle 10 angeordneten, zweiten Messerschwenkwelle 17 verbunden ist. Diese zweite Messerschwenkwelle 17 ist nicht in den Seitenwänden 7, 8 des Förderkanalbodens 1 gelagert, sondern gemeinsam mit den Hebeln 14 um die erste Messerschwenkwelle 10 unabhängig von dieser hin und her drehbar.

Wie aus Fig. 1 und Figuren 4 und 5 ersichtlich, ist zur Verschwenkung der zweiten Messerschwenkwelle 17 und der zugeordneten Messer 5 auf wenigstens einer Seite der ersten Messerschwenkwelle 10 ein Winkelhebel 18 mit einem ersten Schenkel 19 und einem zweiten Schenkel 20 vorgesehen, die sich in diesem Beispiel stumpfwinklig zueinander erstrecken. Der erste Schenkel 19 ist drehfest mit der Messerschwenkwelle 17 verbunden. Am freien Endbereich des anderen Schenkels 20 greift die Kolbenstange 21 eines doppeltwirkenden Hydrozylinders 22 als Stelleinrichtung an, dessen Zylinder an der Seitenwand 8 angelenkt ist. Im Schnittpunkt der Schenkel 19, 20 weist der Winkelhebel 18 eine Nabe 23 auf zur drehbaren Lagerung auf der ersten Messerschwenkwelle 10. Es ist erkennbar, dass der Winkelhebel 18 bei Betätigung des Hydrozylinders 22 um die erste Messerschwenkwelle 10 schwenkt und dabei die Messer 5 über die fest mit dem Winkelhebel 18 verbundene, zweite Messerschwenkwelle 17 und die auf dieser befestigten Hebel 14 unabhängig von der ersten Messergruppe 2 bzw. dem Messer 3 zentral verstellbar sind.

In der kolbenseitigen, mit einer nicht dargestellten Steuereinheit verbundenen Zuleitung 24, 25 jedes Hydrozylinders 13, 22 ist jeweils ein Hydrospeicher 26, 27 als Überlastsicherung vorgesehen, so dass beide Messergruppen 2, 4 unabhängig voneinander gegen Überlast und Fremdkörper geschützt sind, in dem die eine, die andere oder beide Messergruppen 2, 4 ausweichen, wenn der Ist-Wert Druck den SollWert Druck des 26 oder 27 oder der Hydrospeicher 26, 27 überschreitet.

Die Arbeitsweise des erfindungsgemäßen Schneidwerkes ist wie folgt:
In der Stellung der Messergruppen 2, 4 gemäß Fig. 1, 2 und 4 befinden sich alle Messer 3, 5 in Nichtschneidstellung 28, beide Hydrozylinder 13, 22 sind eingefahren.

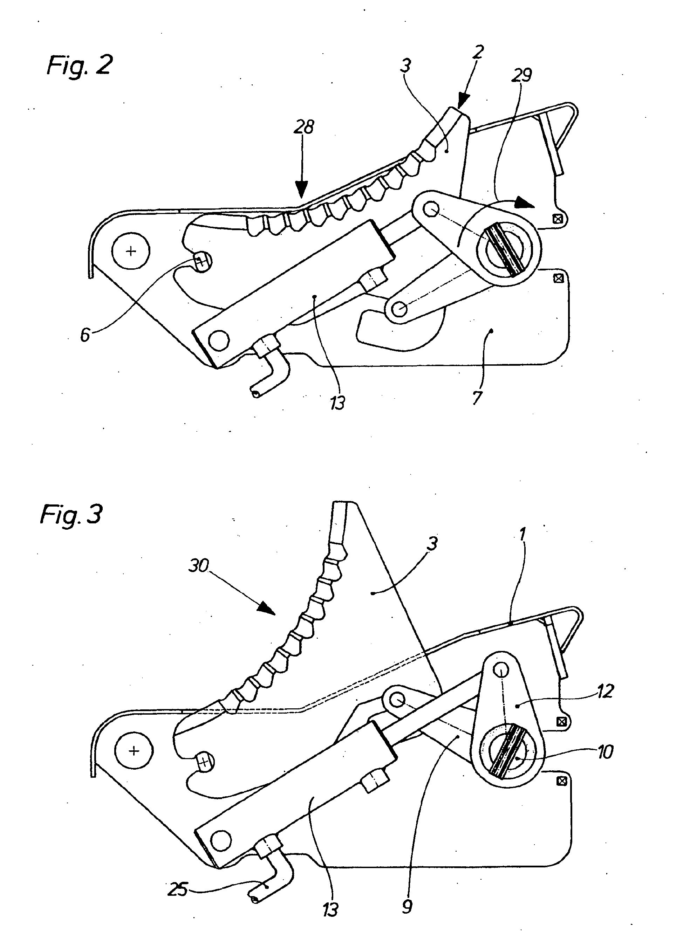

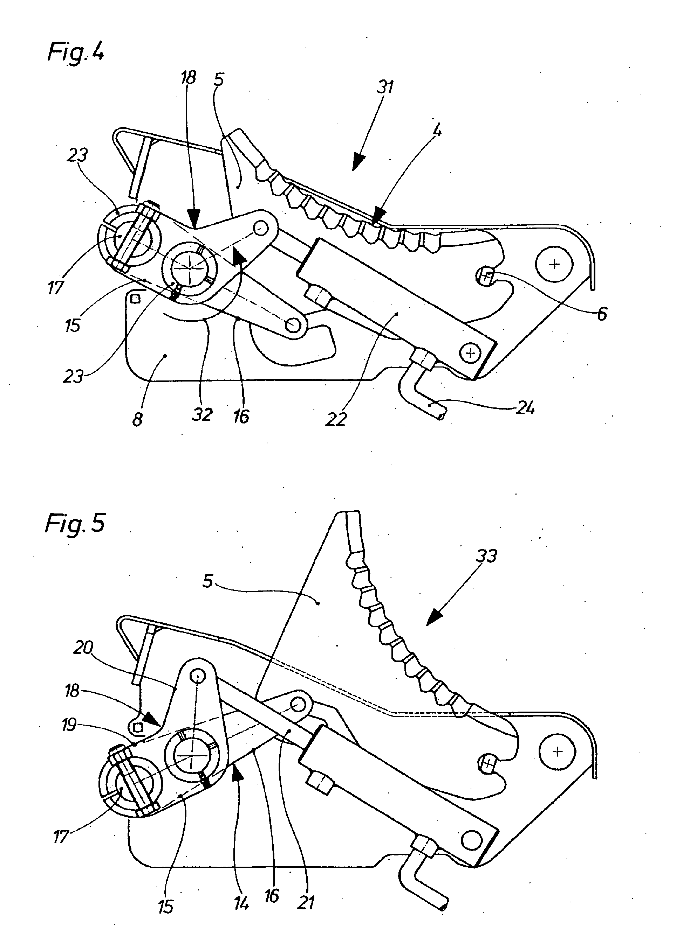

Durch Betätigung der Stelleinrichtung der ersten Messergruppe 2, d.h. Ausfahren des Hydrozylinders 13 wird das Messer 3 durch Verschwenken der ersten Messerschwenkwelle 10 in Richtung des Pfeiles 29, siehe Fig. 1 in die in Figur 3 dargestellte Schneidposition 30 gebracht, während die zweite Messergruppe 4 gemäß Figur 4 in der Nichtschneidstellung 31 verbleibt.

Durch Betätigung der Stelleinrichtung 22 der zweiten Messergruppe 4, d.h. Ausfahren des Hydrozylinders 22 werden auch die Messer 5 durch Verschwenken des Winkelhebels 18 und der zweiten Messerschwenkwelle 17 in Richtung des Pfeils 32, siehe Fig. 1 in die Schneidstellung 33 gemäß Figur 5 gebracht, so dass alle Messer 3, 5 in wirksamem Schneideingriff mit dem nicht dargestellten Förderrotor sind, siehe Fig. 3 und 5.

Alternativ kann man durch Einfahren des Hydrozylinders 13 der ersten Messergruppe 2 nur diese in deren Nichtschneidstellung 28 bringen und ausschließlich die zweite Messergruppe 4 in deren Schneidstellung 33 belassen. Wenn der ersten Messergruppe 2 beispielsweise acht Messer 3 und der zweiten Messergruppe 4 sieben Messer 5 oder eine andere Zahl zugeordnet sind, können per Knopfdruck vom Schlepper aus wahlweise acht, sieben, fünfzehn oder gar keine Messer eingestellt werden.

Gegenüber dem bisher bekannten zwölf Messer-Schneidwerk ist lediglich die erste Messerschwenkwelle 10 für eine höhere Belastung (15 Messer) stärker dimensioniert und als Standard eingeführt, so dass auch eine Nachrüstarbeit für die neue Schalteinrichtung 14, 17, 18, 22, 26 besteht, wenn man zunächst nur das Standard-Schneidwerk ohne Schalteinrichtung disponiert hat.

## Patentansprüche

1. Schneidwerk für/an landwirtschaftlichen Erntefahrzeugen, insbesondere für landwirtschaftliche Pressen, mit mehreren in Reihe nebeneinander angeordneten, formschlüssig mit wenigstens einer ersten Messerschwenkwelle (10) verbundenen Messern (3), welche nur gemeinsam um eine Messertragwelle (6) wahlweise in eine Schneid- (30) oder Nichtschneidstellung (28) verstell- und bei Überlast nur gemeinsam ausweichbar sind, **dadurch gekennzeichnet, dass** das Schneidwerk wenigstens ein Messer (5) aufweist, welches mit einem verschwenkbar auf der ersten Messerschwenkwelle (10) gelagerten Hebel (14) verbunden ist und mit einer Verstelleinrichtung (14, 17, 18, 22, 26) derart zusammenwirkt, dass es unabhängig von den mit der ersten Messerschwenkwelle (10) verbundenen Messern (3) um die Messertragwelle (6) verstell- und ausweichbar ist.

2. Schneidwerk nach Anspruch 1, **dadurch gekennzeichnet, dass** der verschwenkbar gelagerte Hebel (14) drehfest mit einer zweiten Messerschwenkwelle (17) verbunden ist.

3. Schneidwerk nach Anspruch 2, **dadurch gekennzeichnet, dass** der zweiten Messerschwenkwelle (17) eine eigene Stelleinrichtung (22) zugeordnet ist.

4. Schneidwerk nach Anspruch 3, **dadurch gekennzeichnet, dass** die Stelleinrichtung (22) an einem drehbar auf der ersten Messerschwenkwelle (10) gelagerten Winkelhebel (18) angreift, welcher drehfest mit der zweiten Messerschwenkwelle (17) verbunden ist.

5. Schneidwerk nach einem oder mehreren der vorhergehenden Ansprüche, **dadurch gekennzeichnet, dass** mehrere in Reihe nebeneinander angeordnete Messer (3, 5) abwechselnd der ersten Messerschwenkwelle (10) oder der zweiten Messerschwenkwelle (17) zugeordnet sind.

6. Schneidwerk nach einem oder mehreren der vorhergehenden Ansprüche, **dadurch gekennzeichnet, dass** der zweiten Messerschwenkwelle (17) direkt oder indirekt eine eigene Überlastsicherung (26) zugeordnet ist.

## Claims

1. A cutting mechanism for/on agricultural harvesting vehicles, in particular for agricultural balers, with a plurality of blades (3) which are arranged in a row next to one another and are connected in positive manner to at least a first blade-pivoting shaft (10), which blades are only jointly adjustable about a blade-supporting shaft (6) either into a cutting position (30) or a non-cutting position (28), and in the event of overloading can move out of the way only jointly, **characterised in that** the cutting mechanism has at least one blade (5) which is connected to a lever (14) mounted pivotably on the first blade-pivoting shaft (10) and cooperates with an adjustment means (14, 17, 18, 22, 26) such that it is adjustable and can move out of the way about the blade-supporting shaft (6) independently of the blades (3) which are connected to the first blade-pivoting shaft (10).

2. A cutting mechanism according to Claim 1, **characterised in that** the pivotably-mounted lever (14) is connected in rotation-resistant manner to a second blade-pivoting shaft (17).

3. A cutting mechanism according to Claim 2, **characterised in that** a separate actuating means (22) is associated with the second blade-pivoting shaft (17).

4. A cutting mechanism according to Claim 3, **characterised in that** the actuating means (22) acts on an elbow lever (18) mounted rotatably on the first blade-pivoting shaft (10), which lever is connected in rotation-resistant manner to the second blade-pivoting shaft (17).

5. A cutting mechanism according to one or more of the preceding claims, **characterised in that** a plurality of blades (3, 5) which are arranged in a row next to one another are associated alternately with the first blade-pivoting shaft (10) or the second blade-pivoting shaft (17).

6. A cutting mechanism according to one or more of the preceding claims, **characterised in that** a separate overload protection mechanism (26) is associated directly or indirectly with the second blade-pivoting shaft (17).

## Revendications

1. Dispositif de coupe pour/dans des machines de récolte agricoles, en particulier pour des presses agricoles comportant plusieurs couteaux (3), disposés par rangées, les uns à côté des autres, en complémentarité de forme, reliés à au moins un premier arbre de pivotement de couteaux (10), qui peuvent être réglés, uniquement ensemble, autour d'un arbre support de couteaux (6), au choix, dans une position de coupe (30) ou dans une position d'absence de coupe (28), et qui ne peuvent être déportés qu'ensemble lors d'une surcharge, **caractérisé en ce que** le dispositif de coupe présente au moins un couteau (5), qui est relié avec un levier (14), pouvant pivoter, disposé sur le premier arbre de pivotement de couteaux (10), et qui interagit avec un dispositif de réglage (14, 17, 18, 22, 26) de telle manière qu'il peut être réglé et déporté autour de l'arbre support de couteaux (6) indépendamment des couteaux (3) reliés avec le premier arbre de pivotement de couteaux (10).

2. Dispositif de coupe selon la revendication 1 **caractérisé en ce que** le levier (14), pouvant pivoter, disposé fixement sans pouvoir tourner, est relié avec un deuxième arbre de pivotement de couteaux (17).

3. Dispositif de coupe selon la revendication 2 **caractérisé en ce qu'**un dispositif de réglage (22) propre est adjoint au deuxième arbre de pivotement de couteaux (17).

4. Dispositif de coupe selon la revendication 3 **caractérisé en ce que** le dispositif de réglage (22) s'accroche à un levier coudé (18), pouvant tourner, disposé sur le premier arbre de pivotement de couteaux (10), levier qui est relié fixement, sans pouvoir tourner, avec le deuxième arbre de pivotement de couteaux (17).

5. Dispositif de coupe selon l'une ou plusieurs parmi les revendications précédentes **caractérisé en ce que** plusieurs couteaux (3, 5), disposés en rangées, les uns à côté des autres, sont assignés à tour de rôle au premier arbre de pivotement de couteaux (10) ou au deuxième arbre de pivotement de couteaux (17).

6. Dispositif de coupe selon l'une ou plusieurs parmi les revendications précédentes **caractérisé en ce qu'**une sécurité de surcharge (26) propre est assignée directement ou indirectement au deuxième arbre de pivotement de couteaux (17).
